# EUROPEAN PATENT SPECIFICATION

(11) **EP 0 564 290 B1**
(45) Date of publication and mention of the grant of the patent: **04.09.1996**
(21) Application number: 93302585.0
(22) Date of filing: 01.04.1993
(51) Int. Cl.: G06F 7/24

(54) **High speed sorting apparatus**
Hochgeschwindigkeitssortiergerät
Appareil de triage à grande vitesse

(30) Priority: 01.04.1992 GB 9207184
(43) Date of publication of application: 06.10.1993
(73) Proprietor: QUESTECH LIMITED, Wokingham Berkshire RG11 2PP (GB)
(72) Inventor: Billing, Robert, Crownhorne, Berkshire (GB)
(74) Representative: Bubb, Antony John Allen

(56) References cited:
- EP-A- 0 236 781
- EP-A- 0 369 415
- MICROPROCESSING AND MICROPROGRAMMING vol. 23, no. 1-5, March 1988, AMSTERDAM, NL, pages 273-278. E. Jovanov et al.: "A Sorting Processor for Microcomputers".

## Description

There is a common requirement, in data processing applications, for a means of sorting a list of items of data into order. This is conventionally done by means of a digital computer running a program which implements any one of a number of algorithms which either repeatedly exchange the positions of data items within the list until the list is ordered, or which manipulate control information so that the list can be read in an ordered fashion, even though the data remains unordered.

These methods all suffer from two problems, firstly that the average time taken to sort the list is long, and secondly that there exist possible initial orders of the list which will cause the time taken to exceed the average by a large margin.

In the production of digital video effects by manipulation of the positions of pixels of an original video image, a requirement can arise wherein records describing input to output mappings of the displacement of pixels from the input to the output picture require to be sorted into an order corresponding to the sequential scanning of the output picture.

The published patent application EP-A-0 369 415 already discloses means for fast sorting of video data. However, depending on the bit length of the key on which the video data has to be sorted the allocation of memory means can be inefficient.

It is accordingly an object of the present invention to provide a new means of sorting data records that will solve the above problem. It will be appreciated, however, that the invention providing the required solution will be applicable to conventional data processing where any form of data is to be sorted into order.

The invention accordingly provides an apparatus for sorting a list of data records into an order defined by the respective values in each record of a series of key fields having an ascending order of significance, comprising a first memory means having a number of addresses at least equal to the maximum number of records to be sorted and having for each address a storage area capable of receiving the data of a record; a plurality of further memory means each having addresses corresponding to the addresses of the first memory means and having at each address a storage area capable of storing an address of the first memory means, said first memory means and said further memory means being capable of being written to and read from independently of one another; means for writing to the first memory means a series of data records to be sorted; logic means for deriving in a given order of said records the values of key fields having the same order of significance together with the addresses in said first memory means at which the corresponding records are stored, and for writing the derived addresses to a said further memory means corresponding to the said order of significance, as pointers defining for each key value a linked list of the addresses of records related by said key value, said logic means including means for determining the said given order of said records for each order of significance of the key field for which values are derived, other than the lowest, by taking, in order of the key values relating the records, the linked lists from that said further memory means corresponding to the key field of the next lower order of significance and by reading from each list in order the corresponding record addresses and for writing the derived addresses to another one of said further memory means corresponding to the said order of significance, as pointers defining for each key value a linked list of the addresses of records related by said key value; and means for controlling the repeated operation of said logic means for ascending orders of significance of the key fields, and for controlling the senses of the orders in which the linked lists and the records therein are read, so that, in a final operation of said logic means, the addresses of records can be read from a corresponding further memory means in sorted order to enable corresponding retrieval from said first memory means of the data records in sorted order.

An apparatus in accordance with the invention may take various forms. However, in a particularly convenient arrangement the first memory means and the further memory means are provided by a memory device having storage areas that can be addressed in common but can be written to and read from independently of one another. The further memory means can then be provided by two sets of storage areas capable of being written to and read from in alternation, so that addresses corresponding to key values of a key field of a lower order of significance can be read from one storage area, while the addresses corresponding to key values of a key field of the next higher order of significance are written to the second storage area.

The said logic means may include two further memory means for storing data identifying the addresses within each of the further memory means at which respective linked lists commence, and programmed means for causing the memories to be written to and read from in alternate operations, to store the addresses of linked Lists in one operation and to generate the said given order of records in the next operation.

Further preferred features and advantages of the apparatus in accordance with the invention will become apparant from the following description taken in conjunction with the accompanying drawings, in which:
Figure 1 is a diagram illustrating the structure of one example of data record to be sorted by an apparatus in accordance with the invention,
Figure 2 is a block circuit diagram of one embodiment of apparatus in accordance with the invention,
Figures 3 and 4 are diagrams illustrating steps in the operation of the apparatus of Fig. 2, and
Figure 5 is a diagram illustrating the sorting process carried out by the apparatus of Fig. 2.

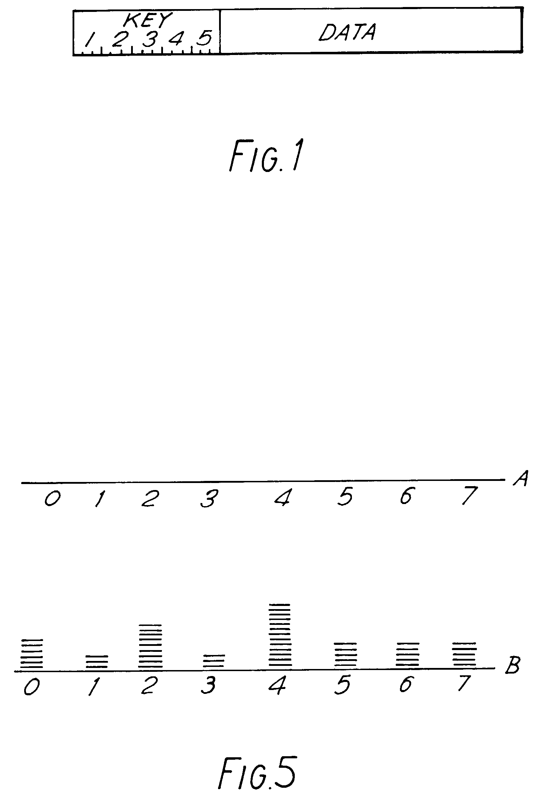

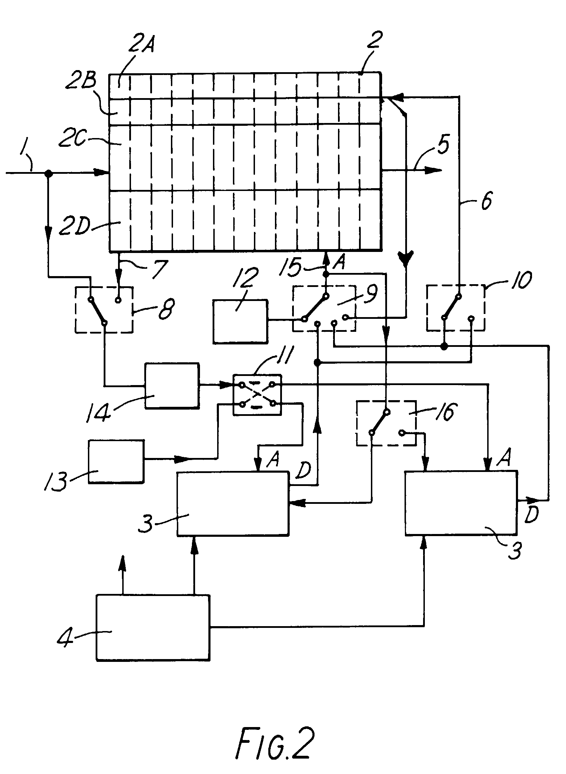

Referring to the drawings, the apparatus is now described with reference to Figs. 1 and 2. Fig. 1 illustrates diagrammatically the structure of an input record, which is in reality an intangible arrangement of information. The key portion of the record is a number of binary digits, which are grouped into fields of n digits each, in this case five fields of three digits. The required order of records is that in which successive records have increasing values of the key field as a whole. This may be achieved by sorting the list into the order of the highest numbered, that is to say least significant, portion of the key, then sorting into the order of the next lowest numbered, and so on, preserving the ordering produced by earlier sorts until the list is completely sorted.

Referring to Fig. 2 an apparatus for use in sorting the records of Fig. 1 comprises an input data bus 1 coupled to a memory store 2 that is divided into memory storage areas having a common address, as illustrated diagrammatically by the broken lines extending vertically. At each address the memory 2 has four storage areas 2A,2B,2C,2D, that are capable of being written to and read from independently of one another. It will be assumed for the purpose of the following explanation that the area 2D is to receive data corresponding to the key part of each record indicated in Fig. 1, whereas the storage area 2C is to receive the data part of the record. Although the described embodiment relates to a record of the kind containing data that does not form part of the key of the record, it will be appreciated that the principle of the invention could be applied to a data record containing only key fields, in which case the storage areas 2C and 2D could be combined in a single area. The storage areas 2A and 2B are utilised for the storage of pointers representing addresses of the memory 2, as will be described in more detail below. The store 2 further has an output bus 5 from which the data records can be read from storage areas 2C and 2D.

The input 1 is further connected to one pole of a change-over switch 8, the other pole of which is coupled to an output 7 from the storage area 2D of the store 2. An output of the switch 8 is coupled to a data selector device 14 that can, in known manner, pass, selectively, data from any one of the key fields of the record of Fig. 1.

A counter 12 is coupled to one input of a selector switch 9 of which the output is connected to an address bus 15 of the store 2, the address presented on the bus 15 determining that address to or from which data in all sections 2A to 2D of the store is to be directed. A further input of the switch 9 is arranged to receive data selectively from either one of the two areas 2A and 2B of the store as described in more detail below. That output of the switch 9 coupled to the address input 15 of the store 2 is further coupled to an input of a further selector switch 16, outputs of which can be coupled selectively to either one of two further, high speed memory stores 3. Each store 3 is wide enough to hold the address of one location in the main store 2 and is long enough to be addressed by the data comprising one field of the key of a record as shown in Fig. 1. The stores 3 are fast enough to be able to perform one read and one write operation per cycle of the system, i.e. twice the speed of the main store 2. Address inputs of each of the stores 3 are coupled to outputs of a selector switch 11, inputs of which are coupled to an output of the data selector 14 and an output of a counter 13. Control inputs of each of the stores 3 are coupled to a logic device 4, which logic device is arranged to control the timing of the reading and writing operations of the stores 2 and 3 and is also arranged to control the actuation of all of the switches illustrated in Fig. 2, via connections omitted from the drawing for clarity. Data outputs of the stores 3 are each connected on the one hand to an input of the switch 9 and on the other hand to an input of a further change-over switch 10 of which an output is coupled via a data bus 6 capable of being coupled selectively to either one of the two storage areas 2A and 2B of the store 2.

The operation of the apparatus of Fig. 2 will now be described in more detail, it being understood that the operation of transferring data between the respective units of the apparatus is effected in a series of cycles generated in the normal way by a clock oscillator and controlling the operation of the logic means 4 and the memories and switches coupled thereto.

Initially the selector switch 8 is set to couple the input 1 to the data selector 14, the selector switch 9 is set to couple the output of the counter 12 to the address bus 15 of the store 2 and the switches 10,11 and 16 are set so that only one store 3 is in use, the address input being coupled via the switch 11 to the data selector 14, the data input being coupled via the switch 16 to the address bus 15 and the data output being coupled via the switch 10 to an input of the storage area 2A of the store 2.

It will be appreciated that whereas the data transmission paths in Fig. 2 are illustrated in single lines, the single lines in fact represent data buses of parallel conductors, the number of conductors in each case corresponding to the number of data bits of the respective signal to be transmitted.

Input records having the structure illustrated in Fig. 1 are transmitted consecutively on the data bus 1 in synchronism with the operation of the counter 12, so that consecutive records are read into the storage areas 2C and 2D at consecutive memory addresses. At the same time the key portion of each input record passes via the switch 8 to the data selector 14 which selects the least significant field of the key and passes this to the address input of the operative one of the high speed stores 3. This store initially contains in every location a bit pattern which is not a valid address in the main store. As a location in the store 3 is addressed by this input signal, the store is provided with consecutive read and write signals from the logic means 4, whereby the contents of the addressed location of the store are written to the storage area 2A addressed via the bus 15 and then the address presented on the bus 15 is read into the store via the switch 16. Thus, for each cycle of the memory 2 during which data is written to the storage areas 2C,2D and 2A, the high speed store 3 is subjected to two consecutive cycles of operation wherein data is read from and written to the same address of the store.

It will be appreciated that since the store 3 is addressed by the value of the least significant key field of each record, and a set of records will include a number of records with the same value for this field of the key, whereas the counter 12 will cause each address of the store 2 to be visited only once, given addresses of the store 3 may be visited several times and on each occasion the stored address of the previous record having the same key value will be written to the storage area 2A at a new address whilst that new address is then written back into the same address of the store 3.

Considering a single location within the high speed store 3, if no records have been read in with the value of the first key field which would cause that location to be addressed, then the high speed store location will contain the initial bit pattern, which is not a valid main store address. If one record has been read in then the location will contain the address in the main store of the record, and the storage area 2A at that address will contain the initial bit pattern. Each storage area 2A thus serves a pointer field indicating the preceding record with the same key value, and if two or more records have been read in then the high speed store location will contain the address of the last record, the pointer field of the last record will contain the address of the next-to-last, and so on until the earliest record will contain the initial bit pattern in its pointer field. This structure, which is known as a linked list, is well-known in Computer Science, and is described in great detail in 'Fundamental Algorithms', by Donald Knuth.

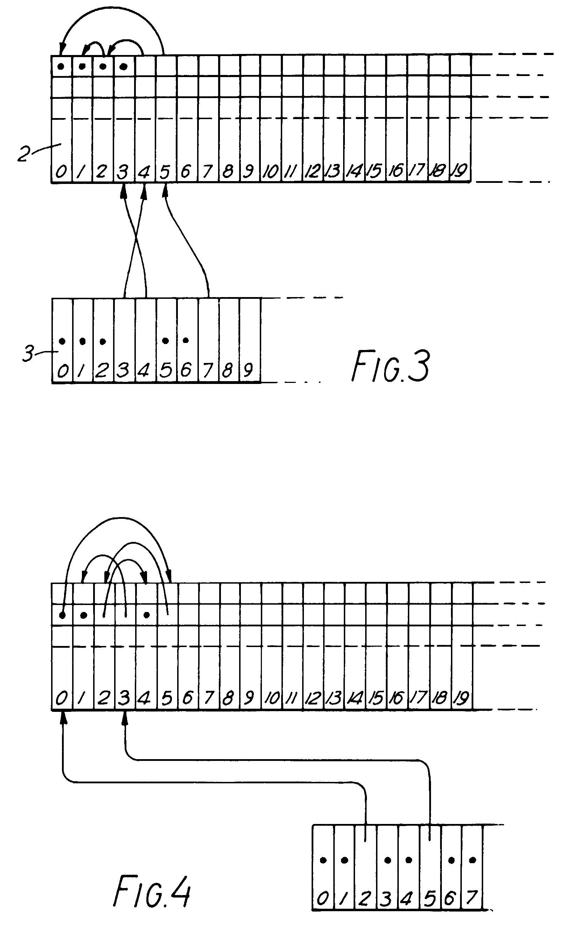

The steps described above are shown diagrammatically in Fig. 3, which shows the position at the end of the first pass. List 3 contains records 4, 2 and 1, List 4 contains record 3 and List 7 contains records 5 and 0.

When the counter 12 has generated all of the addresses of the store 2 in a first pass, assuming that the total number of records presented at input 1 corresponds to the number of addresses in the store, or when the control logic 4 detects an end of data signal at input 1, the control logic 4 now causes the switch 8 to couple the input of the data selector 14 to the output 7 of the section 2D of the store 2, while the switch 9 is coupled to link the address input 15 of the store 2 to the output of that store 3 which was in operation during the first pass. The input 1 to the store 2 is now inoperative so that the contents of the sections 2C and 2D of the store remain unchanged. The switch 11 is operated to couple the address input of the above store 3 to the output of counter 13, whilst the address input of the other store 3 is coupled to the output of data selector 14. The switches 16 and 10 are operated to couple the data input of the other store to the address bus 15 and the data output of the other store, via the data bus 6 to the storage area 2B of the store 2. The data selector 14 is also set to select the next key field of the key data taken from the storage area 2D. The key fields are numbered from 1 (most significant) to n (least significant). If the number of the selected key field is odd then the counter 13 is set to count up from zero to a number which represents the last address of the high speed store 3, if the number of the key field is even then the counter is set to count down from the maximum value to zero.

For each value generated by the counter 13 the corresponding location in the selected high speed store is read. The corresponding data read from the high speed store is tested by an appropriate logic element of the logic means 4, not shown, to ascertain whether the value read from the store is a valid address of the store 2, in which case the value read is allowed to pass via the switch 9 to the address bus 15 where it is used to read from the corresponding address the key data from storage area 2D, which is presented on output 7 to the data selector 14, and the address within the storage area 2A, which is presented to the corresponding input of the switch 9.

The data selector 14 passes the data of the currently selected key field to the relevant high speed store 3 and data is read from and written to the latter store in the same way as in the preceding operation, i.e. the value read from the store is used to supply the address pointer to that storage area 2B of the store 2 addressed by the data bus 15, and the address on the data bus 15 is read back into high speed store 3.

The data presented at the output of storage area 2A of the store 2 is now tested by the logic device 4, by means not shown, to ascertain whether it comprises a valid address of the store 2, in which case the logic device 4 is caused to halt incrementation of the counter 13 and to actuate the changeover switch 9 to couple the address bus 15 to output of storage area 2A of the store 2. The corresponding address presented from the storage area 2A now determines the next address of the store 2 from which data is to be read. The preceding operation is repeated until the output from the storage area 2A is detected as the initial bit pattern, whereupon incrementation of the counter 13 is restarted and the switch 9 is reset to take the next address from the data output of that store 3 addressed by counter 13.

If, during the above operation, the data output from the store 3 addressed by counter 13 is not a valid address of the main store 2, the operations of reading from and writing to the store 2 are skipped, and the counter 13 is incremented until a valid address is again produced.

The operation of the device at this stage will be understood more clearly by reference to Figs. 3 and 4. Thus, the store 3 being addressed by the counter 13 corresponds to the store 3 of Fig. 3, and as the counter 13 is incremented, original bit patterns will be output from the store 3 as the counter 13 visits the first three addresses in the store. The first valid address applied at address bus 15 is thus the address of record 4 of the store 2 that is contained at the address 3 of the store 3. The storage area 2A of address 4 of the store 2 contains the address of record 2 and so on, so that the records indicated in Fig. 3 are read in forward order and are visited in the order 4,2,1,3,5,0.

Fig. 4 shows the corresponding position at the end of the second pass for the store 3 of which the address bus was coupled to the output of data selector 14. Thus in this case List 2 contains records 0,5,2 and 4 and List 5 contains records 3 and 1. If this is now read in reverse order the records will be visited in the order 3,1,0,5,2,4. It will be appreciated that each memory store 3 must be reset to contain the original bit pattern at all addresses before it is connected to receive the data from data selector 14 and this is achieved in an appropriate program step set by the logic device 4.

By this method the main store locations may be accessed in either normal or reverse order of the field which was chosen by the data selector 14 on the previous pass. Within a particular value of a key field the data will appear in an order which is the reverse of the order in which the data appeared on the previous pass. It is therefore necessary, as described above to sort into reverse order on even numbered fields, and into normal order on odd numbered fields, reflecting the number of reversals of the list which are still to come.

The operation is now repeated as necessary until the records have been sorted using all key fields. The same operation of visiting records in order is now performed on the final list, and the data and key fields are output from the apparatus at 5.

The process may be illustrated by the manual analogy shown in Fig. 5. This shows two tables A and B, on which the records may be collected in numbered piles, illustrated by the stacks of cards, representing records, shown on table B.

To perform the operation manually, assume that the unsorted cards, representing records, are initially taken from one or more unordered piles on table A. Each card is inspected, and is placed in the pile indicated by the three binary digits in field 5 of the key. When all the cards have been placed on table B, the operator then takes all the cards from pile 0 in order, then all the cards from pile 1 and so on until the end of pile 7 is reached. The cards so taken are placed on table A in the pile indicated by the digits in field 4 of the key. The situation at the end of this operation is that all the cards are on table A are in piles which are selected by the value in the field 4, and within each pile the cards are in reverse order of the value in field 5, that is to say the largest value is at the top of the pile, and the smallest value is on the table. The operator now moves cards from table A to table B, picking them from pile 7 until it is exhausted, then pile 6 and so on until pile 0 is exhausted. Each card is inspected and placed in the pile indicated by field 3 of the key.

The operation is continued by alternately moving the cards from table A to B and back, each time using a lower numbered field in the key. When an odd numbered field is being inspected then the cards are moving from A to B, cards are taken in descending order of pile number from A, and the cards will pass through the operator's hands in descending order of the value in the fields already used. When an even numbered field is being inspected then the cards are moving from B to A, cards are taken in ascending order of pile number from B, and cards pass through the operator's hands in ascending order of the fields already used.

The process ends with all cards on table B. Taking the whole of pile 0, then pile 1 and so on to pile 7 the cards will be found to be in order.

This method will be found to work for any number of fields, any number of cards, and for cases where the fields of the key are of unequal size.

The time taken to sort data into order, if the key contains F fields and there are N items in the List, and each high speed store has K locations, cannot exceed F * ( N + K - 1 ) cycles, and cannot be less than F * N cycles.

The cost of the high speed store rises with the number of digits in a key field, but the time taken to sort falls with the number of fields, and so in practical applications the fields of the key will typically consist of between ten and twenty binary digits.

As mentioned initially, although the sorting apparatus as described above is of general utility it is of particular advantage when incorporated as a part of a digital video effects apparatus for transforming video images. Thus such a video effects apparatus may include means for generating a series of records each comprising a data field defining the attributes of a pixel of the video image and a key field defining the position of the pixel in an image frame, means for transforming the values of the key fields of said records to define output mappings of the displacement of pixels from the input to the output picture, and a sorting apparatus as described above for sorting the transformed records into the order of said key fields to enable generation of the transformed video image frame signal by scanning of said records in the sorted order.

## Claims

1. An apparatus for sorting a list of data records into an order defined by the respective values in each record of a series of key fields having an ascending order of significance, said apparatus being characterised in that it comprises a first memory means (2C,2D) having a number of addresses at least equal to the maximum number of records to be sorted and having for each address a storage area capable of receiving the data of a record; a plurality of further memory means (2A,2B) each having addresses corresponding to the addresses of the first memory means (2C,2D) and having at each address a storage area capable of storing an address of the first memory means, said first memory means (2C,2D) and said further memory means (2A,2B) being capable of being written to and read from independently of one another; means (1,12,15) for writing to the first memory means a series of data records to be sorted; logic means (3,4) for deriving in a given order of said records the values of key fields having the same order of significance together with the addresses in said first memory means (2C,2D) at which the corresponding records are stored, and for writing the derived addresses to a said further memory means (2A,2B) corresponding to the said order of significance, as pointers defining for each key value a linked list of the addresses of records related by said key value, said logic means (3,4) including means for determining the said given order of said records for each order of significance of the key field for which values are derived, other than the lowest, by taking in order of the key values relating the records, the linked lists from that said further memory means (2A,2B) corresponding to the key field of the next lower order of significance and by reading from each list in order the corresponding record addresses and for writing the derived addresses to another one of said further memory means corresponding to the said order of significance, as pointers defining for each key value a linked list of the addresses of records related by said key value; and means (4) for controlling the repeated operation of said logic means (3,4) for ascending orders of significance of the key fields, and for controlling the senses of the orders in which the linked lists and the records therein are read, so that, in a final operation of said logic means (3,4) the addresses of records can be read from a corresponding further memory means (2A,2B) in sorted order to enable corresponding retrieval from said first memory means (2C,2D) of the data records in sorted order.

2. An apparatus as claimed in claim 1, characterised in that said first memory means and said further memory means are provided by a single memory device (2) having storage areas (2A, 2B, 2C, 2D) that can be addressed in common but can be written to and read from independently of one another.

3. An apparatus as claimed in claim 1 or 2, characterised in that said further memory means comprise two memory means (2A, 2B) and that said logic means includes means (8,9,12,13) for reading in said given order the key fields of data records contained in said first memory means (2C,2D), two additional memory means (3), means (14) for selecting from each of the key fields read a digit of a given significance and for selecting an address of one of said additional memory means (3) determined by the value of said digit, means (10) for writing in one of said further memory means (2A,2B) data from the selected address of said additional memory means (3) at the address in said first memory means (2C,2D) of the record being read and means (16) for then storing the latter address at the said selected address of the additional memory means (3), the arrangement being such that alternate ones of said two further memory means (2A,2B) and said two additional memory means (3) are written to in consecutive steps wherein digits of said key fields of ascending order of significance are respectively selected.

4. An apparatus as claimed in claim 3, characterized in that a first counter (12) is arranged to address the first memory means (2C,2D) in a first step of reading in said given order the key fields of data records contained in said first memory means (2C,2D) and that said means for reading in said given order includes a further counter (13) for addressing a corresponding one of said additional memory means (3) in subsequent steps, in order to derive addresses of the first memory means (2C,2D) from said additional memory means (3) and from linked lists of addresses held in a corresponding one of said further memory means (2A,2B) and to which said additional memory means provides pointers.

5. An apparatus according to claim 4, characterized in that said means for reading in said given order further includes a selector switch (9) arranged to couple an address input of said first memory means (2C,2D) and said further memory means (2A,2B) selectively to said first counter (12), to an output of either one of the said additional memory means (3) or to an output of either one of said further memory meaans (2A, 2B) under the control of said logic means (4).

6. An apparatus according to claim 5, characterized in that said logic means (4) includes means for testing data read from said additional memory means (3) and from said further memory means (2A,2B) and for controlling incrementation of said further counter (13) and actuation of said selector switch (9) in accordance with whether the data read represents a valid address of the said first memory means (2C,2D).

7. An apparatus according to any one of claims 1 to 6, characterized in that it is incorporated in a digital video effects device and is arranged to sort records each comprising a key field defining the position in a video frame of a pixel of which the attributes are defined in a data field of the same record.

8. An apparatus according to claim 7, characterized in that said digital video effects device incorporates transposing means for transposing key values of a set of records defining an image frame according to output mappings of the displacement of pixels from the input to the output picture and for providing correspondingly transposed records for sorting, and scanning means for scanning the sorted records to generate a video signal for reproducing the transposed image.

## Patentansprüche

1. Vorrichtung zum Sortieren einer Liste von Datenaufzeichnungen in einer Reihenfolge, die durch die entsprechenden Werte einer jeden Aufzeichnung einer Reihe von Schlüsselfeldern bestimmt ist, die in einer aufsteigenden Bedeutungsfolge sortiert sind, gekennzeichnet durch eine erste Speicheranordnung (2C, 2D), die über eine Anzahl von Adressen, welche mindestens gleich der Maximalzahl der zu sortierenden Aufzeichnungen entspricht, und für jede Adresse über einen Speicherbereich verfügt, der die Daten einer Aufzeichnung aufnehmen kann; eine Mehrzahl weiterer Speicheranordnungen (2A, 2B), die jeweils über den Adressen der ersten Speicheranordnung (2C, 2D) entsprechende Adressen und für jede Adresse über einen Speicherbereich verfügen, der eine Adresse der ersten Speicheranordnung speichern kann, wobei die erste Speicheranordnung (2C, 2D) und die weiteren Speicheranordnungen (2A, 2B) unabhängig voneinander beschrieben und ausgelesen werden können; eine Anordnung (1, 12, 15) zum Einschreiben einer Reihe von zu sortierenden Datenaufzeichnungen in die erste Speicheranordnung; eine Logikschaltung (3, 4) um die Werte von Schlüsselfeldern, welche die gleiche Bedeutungsfolge haben, in einer vorgegebenen Aufzeichnungen-Sortierfolge zusammen mit den Adressen in der ersten Speicheranordnung (2C, 2D), an welchen die entsprechenden Aufzeichnungen gespeichert sind, abzuleiten und um die abgeleiteten Adressen entsprechend der Bedeutungsfolge in eine der weiteren Speicheranordnungen (2A, 2B) als Zeiger einzuschreiben, welche für jeden Schlüsselwert eine verkoppelte Liste von Aufzeichnungsadressen bestimmen, die über den Schlüsselwert miteinander verknüpft sind, wobei die Logikschaltung (3, 4) eine Anordnung zur Bestimmung der vorgegebenen Sortierfolge der Aufzeichnungen für jede Bedeutungsfolge des Schlüsselfeldes, für das Werte abgeleitet werden, aufweist, indem für einen anderen als den niedrigsten Wert in der Sortierfolge der Schlüsselwerte entsprechend den Aufzeichnungen die verkoppelten Listen aus der besagten weiteren Speicheranordnung (2A, 2B) entsprechend dem Schlüsselfeld der nächst niedrigeren Bedeutungsfolge genommen werden und von jeder Liste in der Reihenfolge die entsprechende Aufzeichnungsadresse ausgelesen wird, sowie zum Einschreiben der abgeleiteten Adressen in eine andere der weiteren Speicheranordnungen entsprechend der besagten Bedeutungsfolge als Zeiger, welche für jeden Schlüsselwert eine verkoppelte Liste von Aufzeichnungsadressen bestimmen, die über den Schlüsselwert miteinander verknüpft sind; und einer Anordnung (4) zum Steuern des wiederholten Betriebs der Logikschaltung (3, 4) für aufsteigende Bedeutungsfolgen der Schlüsselfelder und zum Steuern der Vorzeichen der Reihenfolgen, in welchen die verkoppelten Listen und die darin befindlichen Aufzeichnungen gelesen werden, so daß bei einem abschließenden Betrieb der Logikschaltung (3, 4) die Adressen der Aufzeichnungen von einer entsprechenden weiteren Speicheranordnung (3, 4) in sortierter Reihenfolge ausgelesen werden können, um die Datenaufzeichnungen in sortierter Reihenfolge von der ersten Speicheranordnung (2C, 2D) entsprechend wiederherstellen zu können.

2. Vorrichtung nach Anspruch 1, dadurch gekennzeichnet, daß die erste Speicheranordnung und die weiteren Speicheranordnungen von einem einzelnen Speichergerät (2) bereitgestellt werden, welches über Speicherbereiche (2A, 2B, 2C, 2D) verfügt, die gemeinsam adressiert werden können, in die bzw. aus denen jedoch unabhängig voneinander eingeschrieben und ausgelesen werden kann.

3. Vorrichtung nach Anspruch 1 oder 2, dadurch gekennzeichnet, daß die weitere Speicheranordnung zwei Speicheranordnungen (2A, 2B) aufweist und daß die Logikschaltung eine Anordnung (8, 9, 12, 13) zum Auslesen der Schlüsselfelder der in der ersten Speicheranordnung (2C, 2D) enthaltenen Datenaufzeichnungen in der vorgegebenen Reihenfolge aufweist, sowie daß zwei zusätzliche Speicheranordnungen (3), eine Anordnung (14) zum Auswählen einer Ziffer einer gegebenen Bedeutung von jedem der Schlüsselfelder und zum Auswählen einer Adresse einer der zusätzlichen Speicheranordnungen (3), die von dem Wert dieser Ziffer bestimmt wird, eine Anordnung (10) zum Einschreiben von Daten von der gewählten Adresse der besagten zusätzlichen Speicheranordnungen (3) in einer der weiteren Speicheranordnungen (2A, 2B) an die Adresse in der ersten Speicheranordnung (2C, 2D) der gelesenen Aufzeichnung und eine Anordnung (16) zum Speichern der letztgenannten Adresse an die gewählte Adresse der zusätzlichen Speicheranordnung (3) vorgesehen sind, wobei die Anordnung so getroffen ist, daß alternierende der beiden weiteren Speicheranordnungen (2A, 2B) und der beiden zusätzlichen Speicheranordnungen (3) in aufeinanderfolgenden Schritten beschrieben werden, wobei Ziffern der Schlüsselfelder mit aufsteigender Bedeutungsfolge entsprechend ausgewählt werden.

4. Vorrichtung nach Anspruch 3, dadurch gekennzeichnet, daß ein erster Zähler (12) so angeordnet ist, daß er die erste Speicheranordnung (2C, 2D) in einem ersten Schritt zum Auslesen der Schlüsselfelder der Datenaufzeichnungen, die in der ersten Speicheranordnung (2C, 2D) enthalten sind, in der vorgegebenen Reihenfolge adressiert, und daß die Anordnung zum Lesen in der vorgegebenen Reihenfolge einen weiteren Zähler (13) zum Adressieren einer entsprechenden der zusätzlichen Speicheranordnungen (3) in nachfolgenden Schritten aufweist, um Adressen der ersten Speicheranordnung (2C, 2D) von der zusätzlichen Speicheranordnung (3) und von verkoppelten Adressenlisten abzuleiten, die in einer entsprechenden der weiteren Speicheranordnungen (2A, 2B) gehalten werden, an welche die zusätzliche Speicheranordnung Zeiger liefert.

5. Vorrichtung nach Anspruch 4, dadurch gekennzeichnet, daß die Anordnung zum Lesen in vorgegebener Reihenfolge ferner einen Wählschalter (9) aufweist, der dafür angeordnet ist, unter der Steuerung der Logikschaltung (4) eine Adresseneingabe von der ersten Speicheranordnung (2C, 2D) und der weiteren Speicheranordnungen (2A, 2B) selektiv an den ersten Zähler (12), einen Ausgang von einer der zusätzlichen Speicheranordnungen (3) oder an einen Ausgang von einer der weiteren Speicheranordnungen (2A, 2B) anzukoppeln.

6. Vorrichtung nach Anspruch 5, dadurch gekennzeichnet, daß die Logikschaltung (4) eine Anordnung zum Prüfen von Daten, die aus der zusätzlichen Speicheranordnung (3) und aus den weiteren Speicheranordnungen (2A, 2B) ausgelesen werden, sowie zum Steuern der Inkrementierung des weiteren Zählers (13) und zur Betätigung des Wählschalters (9) in Abhängigkeit davon, ob die gelesenen Daten einer gültigen Adresse der ersten Speicheranordnung (2C, 2D) entsprechen, aufweist.

7. Vorrichtung nach einem der Ansprüche 1 bis 6, dadurch gekennzeichnet, daß sie in eine Vorrichtung zum Erzeugen digitaler Videoeffekte integriert und so angeordnet ist, daß sie Aufzeichnungen sortiert, die jeweils ein Schlüsselfeld aufweisen, welches die Position in einem Videohalbbild eines Pixels definiert, dessen Attribute in einem Datenfeld der gleichen Aufzeichnung festgelegt sind.

8. Vorrichtung nach Anspruch 7, dadurch gekennzeichnet, daß die Vorrichtung zum Erzeugen digitaler Videoeffekte eine Überlagerungsanordnung zum Überlagern von Schlüsselwerten eines Satzes von Aufzeichnungen, die ein Halbbild bestimmen, gemäß den Ausgabeabbildungsfunktionen der Verlagerung von Pixeln von dem Eingabe- zu dem Ausgabebild sowie zum Bereitstellen entsprechend überlagerter Aufzeichnungen zwecks Sortierung und eine Abtastanordnung zum Abtasten der sortierten Aufzeichnungen aufweist, um ein Videosignal zur Reproduktion des überlagerten Bildes zu erzeugen.

## Revendications

1. Appareil pour trier des enregistrements de données d'une liste dans un ordre défini par les valeurs respectives dans chaque enregistrement d'une série de champs clés ayant un ordre croissant d'importance, ledit appareil étant caractérisé en ce qu'il comprend des premiers moyens de mémoire (2C, 2D) ayant un nombre d'adresses au moins égal au nombre maximal d'enregistrements à trier et ayant pour chaque adresse une zone de stockage susceptible de recevoir les données d'un enregistrement; une multiplicité d'autres moyens de mémoire (2A, 2B) ayant chacun des adresses correspondant aux adresses des premiers moyens de mémoire (2C, 2D) et ayant à chaque adresse une zone de stockage susceptible de stocker une adresse des premiers moyens de mémoire, lesdits premiers moyens de mémoire (2C, 2D) et lesdits autres moyens de mémoire (2A, 2B) pouvant être lus ou inscrits indépendamment les uns des autres, des moyens (1, 12, 15) pour écrire dans les premiers moyens de mémoire une série d'enregistrement de données à trier; des moyens logiques (3, 4) pour dériver dans un ordre donné desdits enregistrements les valeurs des champs clés ayant le même ordre d'importance en même temps que les adresses dans lesdits premiers moyens de mémoire (2C, 2B) auxquelles sont stockés les enregistrements correspondants, et pour écrire les adresses dérivées dans celui desdits autres moyens de mémoire (2A, 2B) correspondant audit ordre d'importance, en tant que pointeurs définissant pour chaque valeur de clé une liste reliée des adresses d'enregistrements apparentés par ladite valeur de clé, lesdits moyens logiques (3, 4) comprenant des moyens pour déterminer ledit ordre donné desdits enregistrements pour chaque ordre d'importance du champ clé pour lequel sont dérivées des valeurs, autres que la plus basse, en prenant dans l'ordre des valeurs de clés apparentant les enregistrements, les listes reliées à partir de celui des autres moyens de mémoire (2A, 2B) correspondant au champ clé de l'ordre d'importance immédiatement inférieur et en lisant dans chaque liste, dans l'ordre, les adresses d'enregistrements correspondants et pour écrire les adresses dérivées dans un autre desdits autres moyens de mémoire correspondant audit ordre d'importance, en tant que pointeurs définissant pour chaque valeur de clé une liste reliée des adresses des enregistrements apparentés par ladite valeur de clé; et des moyens (4) pour commander l'opération répétitive desdits moyens logiques (3, 4) pour des ordres croissants d'importance des champs clé, et pour commander les sens des ordres selon lesquels sont lus les listes reliées et les enregistrements qui y sont contenus de telle sorte que, dans une opération finale desdits moyens logiques (3, 4) les adresses des enregistrements peuvent être extraites d'un autre moyen de mémoire correspondant (2A, 2B) dans un ordre trié afin de permettre une récupération correspondante dans lesdits premiers moyens de mémoire (2C, 2D) des enregistrements de données dans un ordre trié.

2. Appareil selon la revendication 1, caractérisé en ce que lesdits premiers moyens de mémoire et lesdits autres moyens de mémoire sont procurés par un seul dispositif de mémoire (2) ayant des zones de stockage (2A, 2B, 2C, 2D) qui peuvent être adressées en commun, mais dans lesquelles on peut effectuer des opérations d'écriture et de lecture indépendamment les unes des autres.

3. Appareil selon la revendication 1 ou la revendication 2, caractérisé en ce que lesdits autres moyens de mémoire comprennent deux moyens de mémoire (2A, 2B) et en ce que lesdits moyens logiques comportent des moyens (8, 9, 12, 13) pour lire dans ledit ordre donné les champs clés des enregistrements de données contenus dans lesdits premiers moyens de mémoire (2C, 2D), deux moyens de mémoire additionnels (3), des moyens (14) pour sélectionner parmi chacun des champs clés lus un chiffre d'importance donnée et pour sélectionner une adresse de l'un desdits moyens de mémoire additionnels (3) déterminés par la valeur dudit chiffre, des moyens (12) pour écrire dans l'un desdits autres moyens de mémoire (2A, 2B) des données en provenance de l'adresse sélectionnée desdits moyens de mémoire additionnels (3) au niveau de l'adresse dans lesdits premiers moyens de mémoire (2C, 2D) de l'enregistrement lu et des moyens (16) pour stocker ensuite la dernière adresse au niveau de ladite adresse sélectionnée desdits moyens de mémoire additionnels (3), l'agencement étant tel que des moyens alternés desdits deux autres moyens de mémoire (2A, 2B) et desdits deux moyens de mémoire additionnels (3) sont écrits dans des étapes consécutives dans lesquelles sont respectivement sélectionnés des chiffres desdits champs clés d'ordre d'importance croissant.

4. Appareil selon la revendication 3, caractérisé en ce qu'un premier compteur (12) est disposé pour adresser les premiers moyens de mémoire (2C, 2D) dans une première étape de lecture dans ledit ordre donné des champs clés des enregistrements de données contenus dans lesdits premiers moyens de mémoire (2C, 2D) et en ce que lesdits moyens de lecture dans ledit ordre donné comprennent un autre compteur (13) pour adresser l'un correspondant desdits moyens de mémoire additionnels (3) dans des étapes ultérieures, afin de dériver des adresses des premiers moyens de mémoire (2C, 2D) à partir desdits moyens de mémoire additionnels (3) et à partir des listes reliées d'adresses contenues dans l'un correspondant desdits autres moyens de mémoire (2A, 2B) et auxquelles lesdits moyens de mémoire additionnels procurent des pointeurs.

5. Appareil selon la revendication 4, caractérisé en ce que lesdits moyens de lecture dans ledit ordre donné comprennent en outre un commutateur sélecteur (9) disposé pour coupler une entrée d'adresses desdits premiers moyens de mémoire (2C, 2D) et desdits autres moyens de mémoire (2A, 2B) sélectivement audit premier compteur (12), à une sortie de l'un ou l'autre desdits moyens de mémoire additionnels (3) ou à une sortie de l'un ou l'autre desdits autres moyens de mémoire (2A, 2B) sous la commande desdits moyens logiques (4).

6. Appareil selon la revendication 5, caractérisé en ce que lesdits moyens logiques (4) comprennent des moyens pour contrôler les données extraites desdits moyens de mémoire additionnels (3) et desdits autres moyens de mémoire (2A, 2B) et pour commander l'incrémentation dudit autre compteur (13) et l'actionnement dudit commutateur sélecteur (9) selon que les données lues représentent ou non une adresse valide desdits premiers moyens de mémoire (2C, 2D).

7. Appareil selon l'une des revendications 1 à 6, caractérisé en ce qu'il est incorporé dans un dispositif d'effets vidéo numériques et qu'il est disposé pour trier des enregistrements comprenant chacun un champ clé définissant la position dans un cadre vidéo d'un pixel dont les attributs sont définis dans un champ de données du même enregistrement.

8. Appareil selon la revendication 7, caractérisé en ce que ledit dispositif d'effets vidéo numériques comprend des moyens de transposition pour transposer des valeurs de clé d'un jeu d'enregistrements définissant une trame d'image selon des cartographies de sortie du déplacement de pixels depuis l'image d'entrée jusqu'à l'image de sortie et pour procurer des enregistrements transposés en correspondance à des fins de tri, et des moyens de balayage pour balayer des enregistrements triés pour générer un signal vidéo pour reproduire l'image transposée.
